Europäisches Patentamt

European Patent Office

Office européen des brevets

(11) Veröffentlichungsnummer: **0 101 013**
A2

(12) **EUROPÄISCHE PATENTANMELDUNG**

(21) Anmeldenummer: 83107651.8

(22) Anmeldetag: 03.08.83

(51) Int. Cl.³: **H 01 J 61/56**
**H 01 J 61/72**

(30) Priorität: 13.08.82 DE 3230192

(43) Veröffentlichungstag der Anmeldung:
22.02.84 Patentblatt 84/8

(84) Benannte Vertragsstaaten:
AT BE CH DE FR GB LI

(71) Anmelder: **Patent-Treuhand-Gesellschaft für
elektrische Glühlampen mbH
Hellabrunner Strasse 1
D-8000 München 90(DE)**

(72) Erfinder: **Wittmann, Horst
Ahornweg 22
D-8901 Stadtbergen(DE)**

(54) **Einseitig gesockelte Kompakt-Leuchtstofflampe.**

(57) Die einseitig gesockelte Entladungslampe enthält einen speziell geformten Montagekörper (3) und ein konisches Bodenteil (4), die jeweils aus Kunststoff bestehen und deren Zusammenwirken das quer zur Lampenlängsachse gelagerte induktive Vorschaltgerät (7) durch einfaches Aufsetzen und Fixieren eines Sockels (11) auf einen Gewindeabschnitt (10) des Montagekörpers (3) unverrückbar haltern. Hierfür überfangen laschenartige, an den Montagekörper (3) angeformte Halterungselemente (12) das Vorschaltgerät (7) von oben und strebenartige, an das Bodenteil (4) angeformte Halterungselemente (22) stützen das Vorschaltgerät (7) von unten ab. Zwei U-förmig gebogene Entladungsgefäße (2) sind mittels einer Blattfeder (15) an flügelartigen, an den Montagekörper (3) angeformte Halterungselemente (13) festgeklemmt. Eine Schutzhaube (5) ist mit dem Bodenteil (4) mittels Rastelementen (24) verbunden. Das konische Bodenteil (4) und die Schutzhaube (5) ist zur Abfuhr der von dem Vorschaltgerät (7) und den Entladungsgefäßen (2) entwickelten Wärme mit Lüftungsöffnungen (26) versehen.

Fig.1

EP 0 101 013 A2

Patent-Treuhand-Gesellschaft
für elektrische Glühlampen mbH., München

Einseitig gesockelte Kompakt-Leuchtstofflampe

Die Erfindung betrifft eine einseitig gesockelte Kompakt-Leuchtstofflampe, bestehend aus einem Montagekörper, der als Halterung für ein oder mehrere U-förmige Entladungsgefäße sowie für ein einen im wesentlichen rechteckigen Querschnitt aufweisendes Vorschaltgerät dient, einem eine lichtdurchlässige Schutzhaube haltenden Bodenteil mit unterschiedlichem Durchmesser und einem Sockel zum Anschluß an eine Versorgungswechselspannung.

Aufgrund der Energiesparbestrebungen in letzter Zeit, sind vermehrt kompakte Leuchtstofflampen mit niedriger Leistungsaufnahme wie die der oben beschriebenen Art oder ähnlich vorgeschlagen worden. Dabei wird angestrebt, einen relativ langen Entladungsweg auf möglichst kleinem Raum unterzubringen. Die Vorschalt- und Zündvorrichtung ist hierbei in der Regel in die Leuchtstofflampe integriert. In der DE-OS 21 19 472 sind mehrere U-förmig gebogene Entladungsgefäße zusammen mit einem die Betriebsschaltung enthaltenden und in den Lampenraum hineinragenden Al-Becher in einer Haltevorrichtung eingebettet. Die lichtdurchlässige oder -streuende Abdeckung ist mit der Haltevorrichtung verschraubt. Das Vorschaltgerät und der Zünder sind entsprechend der in der DE-OS 28 35 183 aufgezeigten Lösung in einem unterhalb eines U-förmigen Entladungsgefäßes angeordneten, als Gehäuse ausgeführten Mittelteil untergebracht, wobei Einzelheiten über die Befestigungsart nicht offenbart sind. Eine in einem Ausführungsbeispiel auch mit Steckkontakten versehene, ein doppelt gebogenes U als Entladungsgefäß aufweisende Leuchtstofflampe ist in der DE-OS 30 05 017 beschrieben. Das Vorschaltgerät ist hierbei innerhalb einer Basisstruktur angeordnet. In einem anderen Beispiel dieser Veröffentlichung ist das Vorschaltgerät als langer isolierter Körper im zentralen Teil der Lampe axial angeordnet. Das Basisteil und die Schutzhülle sind mit Lüftungsöffnungen versehen und werden z.B. mittels Reibung aneinandergehalten und gesichert. Ähnliches ist aus der EP-Veröffentlichung 26 428 A3 entnehmbar. Eine Montageplatte dient hier als Halteorgan für eine doppelt gebogene U-Lampe und ein Vorschaltgerät. Die kugelförmige Haube ist mittels Schrauben an einem kalottenförmigen Basisteil befestigt. In der DE-OS 31 11 836 ist ein doppelt U-förmig gebogenes Entladungsgefäß zusammen mit dem Vorschaltgerät und dem Glimmzünder innerhalb eines Außenkolbens aus Glas von einer Montageplatte aus Metall gehaltert. Die Montageplatte umgreift mit einem an ihrem Umfang hochstehenden Rand den Außenkolben. Ein Lampenfuß aus Kunststoff schließt den hochstehenden Rand der Montageplatte klemmend ein. Lampenfuß und Außenkolben weisen keine Lüftungsöffnungen auf, wodurch besondere Maßnahmen zur Wärmeableitung am Vorschaltgerät und am Glimmzünder erforderlich werden.

Aufgabe der Erfindung ist es, eine Konstruktion für eine kompakte Leuchtstofflampe mit niedriger Leistung zu schaffen, die eine schnelle und einfache Montage ermöglicht und bei der eine gute Wärmeabfuhr der von dem Vorschaltgerät entwickelten Wärme vorhanden ist.

Die kompakte Leuchtstofflampe mit den im Oberbegriff des Hauptanspruchs genannten Merkmalen ist erfindungsgemäß dadurch gekennzeichnet, daß das Vorschaltgerät mit seiner Längsachse im rechten Winkel zur Lampenlängsachse angeordnet ist und zwischen dem jeweils Halterungselemente aufweisenden Montagekörper und Bodenteil gelagert und durch Aufsetzen und Fixieren des Sockels auf den Montagekörper festgeklemmt ist und daß der Montagekörper an den zwei parallel zur Längsachse des Vorschaltgerätes verlaufenden Seitenflächen weitere Halterungselemente zur Befestigung des oder der Entladungsgefäße aufweist. Während die Halterungselemente für das Vorschaltgerät am Montagekörper laschenartig ausgebildet sind und das Vorschaltgerät mindestens teilweise von oben überfangen, sind die Halterungselemente des Bodenteils strebenartig ausgebildet und stützen das Vorschaltgerät von unten ab. Das Bodenteil weist weiterhin an seinem unteren Ende einen hohlzylindrischen Ansatz mit kleinerem Durchmesser auf, der einen oberhalb des den Sockel aufnehmenden Ansatzes befindlichen zylindrischen Abschnitt des Montagekörpers umgibt und an dem der Sockel kraftschlüssig anliegt. Die für das oder die Entladungsgefäße vorgesehenen Halteelemente am Montagekörper sind flügelartig ausgebildet und greifen an dessen Längsseiten zwischen die geraden Schenkel des oder der U-förmigen Entladungsgefäße. Die Befestigung der Haube erfolgt auf einfache Weise, indem diese an einem hohlzylindrischen Ansatz mit größerem Durchmesser am oberen Ende des Bodenteils mittels einer Schnappverbindung einrastet. Der Montagekörper, das Bodenteil und die Haube bestehen vorteilhaft aus Kunststoff, wobei Lüftungsöffnungen im Bodenteil und in der lichtdurchlässigen Haube für eine natürliche Konvektionskühlung sorgen.

Die erfindungsgemäße Konstruktion des Montagekörpers und des entsprechenden Bodenteils ermöglicht eine einfache und somit kostengünstige Montage der kompakten Leuchtstofflampe. Sämtliche verwendeten Einzelteile werden nur zusammengesteckt; es sind keinerlei Schweiß-, Niet- oder - mit Ausnahme des auf den Montagekörper ggf. aufzuschraubenden Sockels - Schraubverbindungen erforderlich. Das Vorschaltgerät wird allein aufgrund der am Montagekörper und am Bodenteil angeformten Laschen bzw. Streben gehaltert und mittels des aufgesetzten und fixierten Sockels festgeklemmt. Die in bezug auf die Lampenlängsachse im rechten Winkel angeordnete Längsachse des Vorschaltgerätes bietet gegenüber ähnlichen Konstruktionen den Vorteil, daß das bzw. die Entladungsgefäße weniger abgeschattet werden und somit mehr Licht nach außen abgestrahlt wird. Die lichtdurchlässige Schutzhaube ist durch einfaches Einschnappen in entsprechende Aussparungen im Bodenteil eingerastet und gleichzeitig gegen Verdrehung gesichert. Die Anbringung von Lüftungsöffnungen im Bodenteil und in der Schutzhaube ermöglicht eine Zwangsentlüftung der von dem induktiven Vorschaltgerät entwickelten Wärme durch Konvektion. Die Verwendung von Bauteilen aus Kunststoff verringert die Wärmekapazität der gesamten Einheit. Darüber hinaus bietet die Halterung des Vorschaltgerätes zwischen zwei Bauteilen aus Kunststoff den Vorteil, daß sich die Netzfrequenz nicht über das Vorschaltgerät auf die gesamte kompakte Leuchtstofflampe überträgt.

Ein praktisches Ausführungsbeispiel der Erfindung wird nachstehend an Hand von neun Figuren näher erläutert:

Figur 1 zeigt eine perspektivische Ansicht einer einseitig gesockelten kompakten Leuchtstofflampe im Teilschnitt;

0101013

Figur 2 zeigt eine Ansicht mit unterschiedlichen
Schutzhauben im Schnitt;

Figur 3 zeigt die Draufsicht der Figur 2 ohne Schutzhaube;

Figur 4 zeigt den Montagekörper in der Vorderansicht
im Teilschnitt;

Figur 5 zeigt den Montagekörper in der Draufsicht;

Figur 6 zeigt den Montagekörper in der Seitenansicht;

Figur 7 zeigt das Bodenteil in der Vorderansicht
im Schnitt;

Figur 8 zeigt das Bodenteil in der Draufsicht;

Figur 9 zeigt die Draufsicht einer zylindrischen
Schutzhaube.

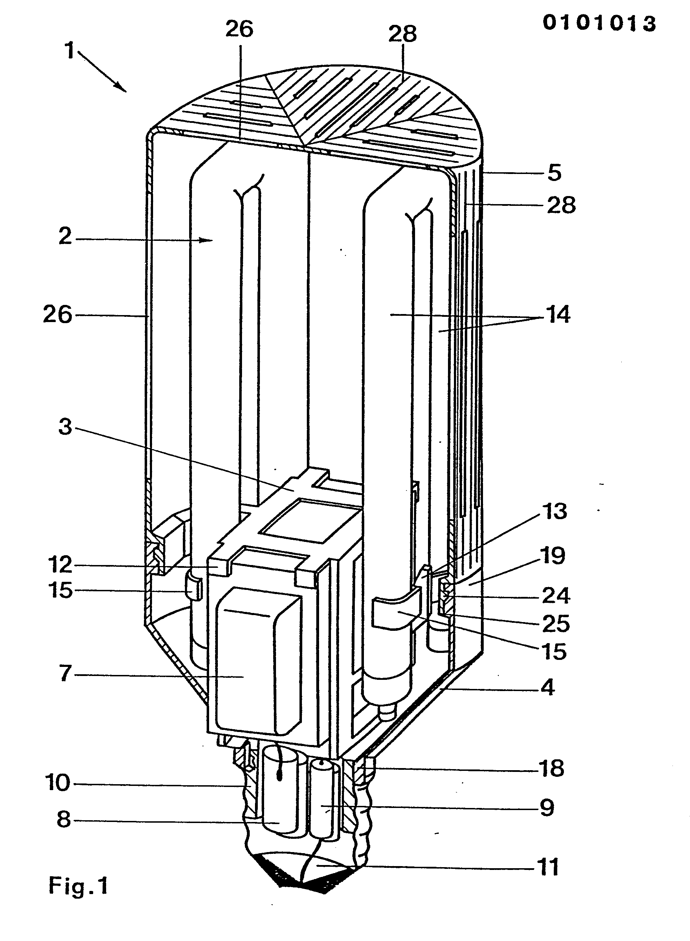

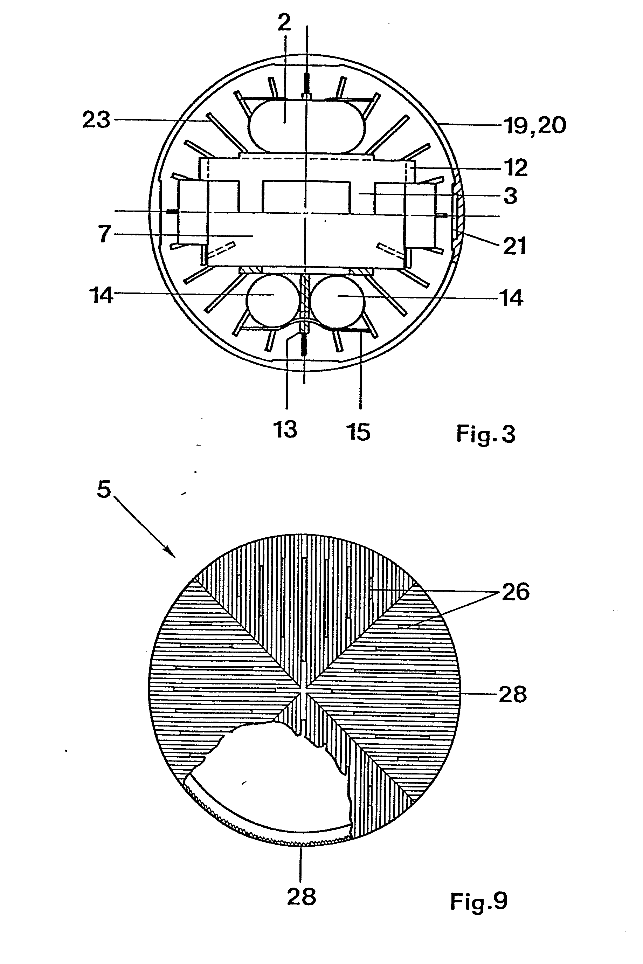

Die in den Figuren 1 bis 3 dargestellte einseitig gesockelte Kompakt-Leuchtstofflampe 1 besteht aus einem
zwei Entladungsgefäße 2 halternden Montagekörper 3,
einem konischen Bodenteil 4, einer zylinderförmigen
Schutzhaube 5 oder einer kugelförmigen Schutzhaube 6
sowie einem induktiven Vorschaltgerät 7. Die für die
Zündung der elektrisch in Reihe geschalteten Entladungsgefäße 2 erforderlichen Glimmzünder 8 mit zugehörigen Entstörkondensatoren 9 sind im Gewindeabschnitt
10 des Montagekörpers 3 angeordnet. Auf dem Gewindeabschnitt 10 ist ein Schraubsockel 11 zum direkten Anschluß der Kompakt-Leuchtstofflampe 1 an eine Versorgungsspannung befestigt.

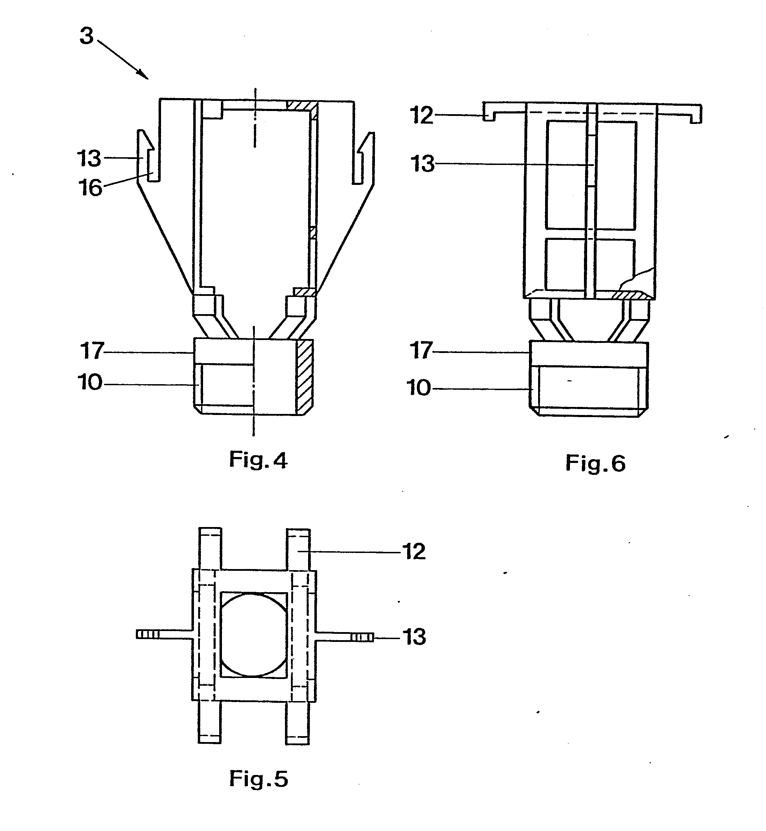

Der Montagekörper 3 in den Figuren 4, 5 und 6 besteht
aus Kunststoff und weist an der oberen Seite laschenartige Halteelemente 12 auf, die das quer zur Lampenlängsachse angeordnete Vorschaltgerät 7 an dessen oberen Längskanten teilweise umfangen. Der Montagekörper 3 ist weiterhin an zwei gegenüberliegenden Seitenflächen mit je einem flügelartigen Halteelement 13 versehen, das zwischen den geraden Schenkeln 14 eines jeden Entladungsgefäßes 2 angeordnet ist. Eine Blattfeder 15 liegt in einer Aussparung 16 jedes flügelartigen Halteelementes 13 und an den geraden Schenkeln 14 des entsprechenden Entladungsgefäßes 2 kraftschlüssig an, wodurch dieses lagegesichert ist. Außerdem ist oberhalb des Gewindeabschnittes 10 des Montagekörpers 3 ein zylindrischer Abschnitt 17 vorgesehen.

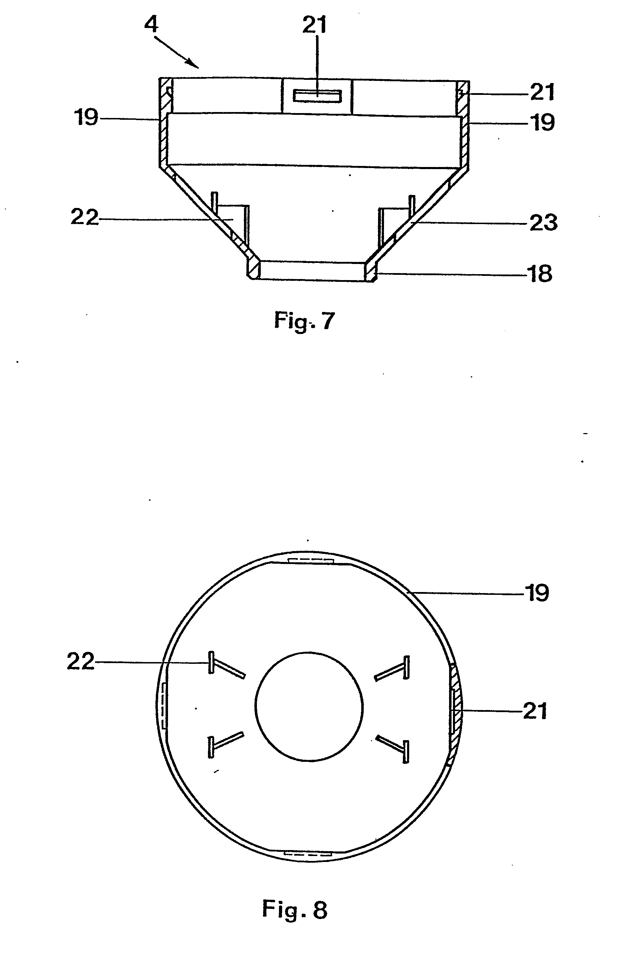

In den Figuren 7 und 8 ist an das aus einem lichtundurchlässigen Kunststoff bestehende konische Bodenteil 4 ein unterer hohlzylindrischer Absatz 18 mit kleinerem Durchmesser und ein oberer hohlzylindrischer Absatz 19 mit größerem Durchmesser angeformt. Der Durchmesser des unteren Absatzes 18 ist an den zylindrischen Abschnitt 17 des Montagekörpers 3 angepaßt. Der obere Absatz 19 ist mindestens an einem Teil seines inneren Umfanges mit Rastelementen in Form von Nuten 21 versehen. Der obere zylindrische Absatz 19 kann je nach Bedarf unterschiedlich lang ausgeführt sein. Im konischen Übergangsbereich der beiden Absätze 18 und 19 mit unterschiedlichen Durchmessern sind dem Innenraum zugewandte strebenartige Halterungselemente 22 angeformt, die das Vorschaltgerät 7 von unten abstützen. Auf diese Weise drückt durch einfaches Aufsetzen und Fixieren des an dem unteren Absatz 18 des Bodenteils 4 anliegenden Schraubsockels 11 dieser das Bodenteil 4 aufwärts und damit das Vorschaltgerät 7 gegen die laschenartigen Haltelemente 12 des Montagekörpers 3. Das Vorschaltgerät 7 ist somit zwischen den Halteelementen 12 des Montagekörpers 3 und den Halteelementen 22 des Bodenteils 4 unverrückbar lagegesichert. Das Bodenteil 4 ist im konischen Bereich zusätzlich mit Lüftungsschlitzen 23 versehen.

Die so vormontierte und verdrahtete Einheit ist abschließend mit einer Schutzhaube 5 oder 6 aus einem lichtdurchlässigen Kunststoff versehen (Figur 1, 2 und 9). Die Schutzhaube 5 oder 6 weist hierfür im unteren Teil einen mit angeformten Rastnasen 24 zylindrischen Rand 25 auf. Der Durchmesser des zylindrischen Randes 25 ist an den Durchmesser des oberen hohlzylindrischen Absatzes 19 oder 20 im Bodenteil 4 angepaßt, wobei die Rastnasen 24 in die entsprechenden Nuten 21 einrasten und eine einfache und feste Verbindung zwischen dem Bodenteil 4 und der Schutzhaube 5 oder 6 herstellen.

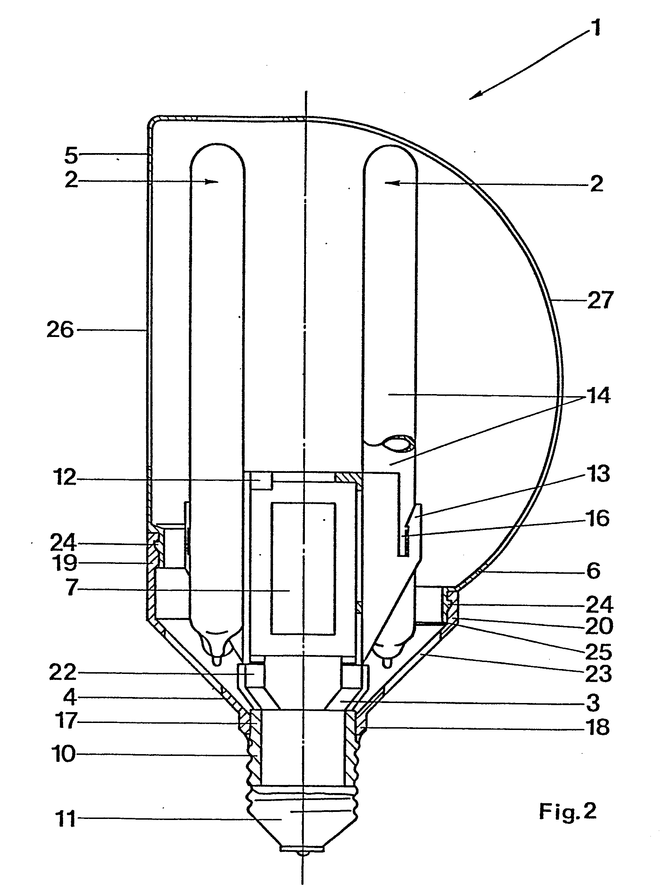

In der Figur 2 sind zwei unterschiedliche Formen von Schutzhauben dargestellt. Am linken Beispiel ist eine zylinderförmige Schutzhaube 5 vorgesehen, wobei der obere hohlzylindrische Absatz 19 des konischen Bodenteils 4 etwas länger ausgebildet ist. Die Schutzhaube 5 ist an der Mantelfläche und an der Stirnfläche mit Lüftungsschlitzen 26 versehen (s. auch Figur 9). Rechts ist ein Beispiel mit einer kugelförmigen Schutzhaube 6 dargestellt. Der obere hohlzylindrische Absatz 20 des konischen Bodenteils 4 ist hierbei etwas kürzer ausgebildet. Auch die kugelförmige Schutzhaube 6 ist an der Peripherie mit Lüftungsschlitzen 27 versehen. Sowohl die zylinderförmige Schutzhaube 5 wie auch die kugelförmige Schutzhaube 6 weisen eine lichtstreuende Riffelung 28 auf.

Die U-förmigen Entladungsgefäße 2 sind vorzugsweise im gebogenen Bereich näherungsweise rechteckförmig ausgebildet, wodurch sich hier in den äußeren Ecken die kältesten Stellen der Entladungsgefäße ergeben, die den Quecksilberdampfdruck der Lampe bestimmen. Der lichte Abstand der geraden Schenkel 14 jedes Entladungsgefäßes 2 ist hierbei vorteilhaft kleiner als der Entladungsgefäßdurchmesser. Die Entladungsgefäße 2 sind an der Innenwandung nach dem Formgebungsvorgang mit einem Dreibandenleuchtstoff versehen. Die zwei in Reihe geschalteten Entladungsgefäße 2 haben bei einer elektrischen Leistungsaufnahme von jeweils 8 W eine Brennspannung von jeweils 55 V und einen Betriebsstrom von 170 mA. Jedes der beiden Entladungsgefäße 2 enthält neben einer Füllmenge von ca. 10 mg Quecksilber sowie ca. 300 Pa Argon als Zündgas auch eine den Betriebsdampfdruck regelnde amalgambildende Substanz. Das Vorschaltgerät 7 ist aus einem U/T-Kern zusammengesetzt, dessen Länge ca. 45 mm, Breite ca. 24 mm und Höhe ca. 40 mm beträgt. Bei einer Impedanz von ca. 900 Ohm sind während des Lampenbetriebes ca. 2,5 W Verlustleistung zu berücksichtigen. Als Zündelement wird ein für diese Art Lampen üblicher Glimmzünder mit einem parallel geschalteten Entstörkondensator verwendet. Die Kompakt-Leuchtstofflampe 1 gibt einen Lichtstrom von ca. 900 lm ab. Die wirtschaftlich nutzbare Lebensdauer beträgt ca. 5000 h. Die Farbtemperatur bei einer für Innenraumbeleuchtung geeigneten Lichtfarbe beträgt ca. 2 700 K.

Wa/To

Patentansprüche

1. Einseitig gesockelte Kompakt-Leuchtstofflampe, bestehend aus einem Montagekörper (3), der als Halterung für ein oder mehrere U-förmige Entladungsgefäße (2) sowie für ein einen im wesentlichen rechteckigen Querschnitt aufweisendes Vorschaltgerät (7) dient, einem eine lichtdurchlässige Schutzhaube (5, 6) haltenden Bodenteil (4) mit unterschiedlichem Durchmesser und einem Sockel (11) zum Anschluß an eine Versorgungswechselspannung, dadurch gekennzeichnet, daß das Vorschaltgerät (7) mit seiner Längsachse im rechten Winkel zur Lampenlängsachse angeordnet ist und zwischen dem jeweils Halterungselemente (12, 22) aufweisenden Montagekörper (3) und Bodenteil (4) gelagert und durch Aufsetzen und Fixieren des Sockels (11) auf den Montagekörper (3) festgeklemmt ist und daß der Montagekörper (3) an den zwei parallel zur Längsachse des Vorschaltgerätes (7) verlaufenden Seitenflächen weitere Halterungselemente (13) zur Befestigung des oder der Entladungsgefäße (2) aufweist.

2. Einseitig gesockelte Kompakt-Leuchtstofflampe nach Anspruch 1, dadurch gekennzeichnet, daß die für das Vorschaltgerät (7) vorgesehenen Halterungselemente (12) am Montagekörper (3) laschenartig ausgebildet sind und das Vorschaltgerät (7) mindestens teilweise von oben überfangen.

3. Einseitig gesockelte Kompakt-Leuchtstofflampe nach Anspruch 1 und 2, dadurch gekennzeichnet, daß die für das Vorschaltgerät (7) vorgesehenen Halterungselemente (22) am Bodenteil (4) strebenartig ausgebildet sind und das Vorschaltgerät (7) von unten abstützen.

4. Einseitig gesockelte Kompakt-Leuchtstofflampe nach
Anspruch 1 bis 3, dadurch gekennzeichnet, daß das
Bodenteil (4) an seinem unteren Ende einen hohlzylindrischen Ansatz (18) mit kleinerem Durchmesser
aufweist, der einen oberhalb des den Sockel (11)
aufnehmenden Ansatzes (10) befindlichen zylindrischen Abschnitt (17) des Montagekörpers (3) umgibt
und an dem der montierte Sockel (11) kraftschlüssig
anliegt.

5. Einseitig gesockelte Kompakt-Leuchtstofflampe nach
Anspruch 1 bis 4, dadurch gekennzeichnet, daß die
für das oder die Entladungsgefäße (2) vorgesehenen
Halterungselemente (13) am Montagekörper (3) flügelartig ausgebildet und an dessen Längsseiten zwischen
den geraden Schenkeln des oder der Entladungsgefäße
(2) angeordnet sind.

6. Einseitig gesockelte Kompakt-Leuchtstofflampe nach
Anspruch 1 bis 5, dadurch gekennzeichnet, daß die
Schutzhaube (5, 6) an dem einen hohlzylindrischen
Ansatz (19) mit größerem Durchmesser aufweisenden
oberen Ende des Bodenteils mittels einer Schnappverbindung befestigt ist.

7. Einseitig gesockelte Kompakt-Leuchtstofflampe nach
Anspruch 1 bis 6, dadurch gekennzeichnet, daß der
Montagekörper (3), das Bodenteil (4) und die Schutzhaube (5, 6) aus Kunststoff bestehen.

8. Einseitig gesockelte Kompakt-Leuchtstofflampe nach
Anspruch 1 bis 7, dadurch gekennzeichnet, daß das Bodenteil (4) und die Schutzhaube (5, 6) mit Lüftungsöffnungen (26, 27) versehen sind.

0101013

Fig.1

0101013

Fig.2

0101013

2

23

19,20

12

3

7

21

14

14

13    15    **Fig.3**

5

26

28

28    **Fig.9**

0101013

Fig.4

Fig.6

Fig.5

5/5

0101013

Fig. 7

Fig. 8